# EUROPÄISCHE PATENTSCHRIFT

(11) **EP 2 683 790 B1**
(45) Veröffentlichungstag und Bekanntmachung des Hinweises auf die Patenterteilung: **25.03.2015**
(21) Anmeldenummer: 12704506.0
(22) Anmeldetag: 13.02.2012
(51) Int. Cl.: C01B 21/00, C01B 21/087, C04B 35/584, C09K 11/77, C09K 11/08

(54) **CARBODIIMID-LEUCHTSTOFFE**
CARBODIIMIDE PHOSPHORS
LUMINOPHORES CARBODIIMIDE

(30) Priorität: 08.03.2011 DE 102011013331
(43) Veröffentlichungstag der Anmeldung: 15.01.2014
(73) Patentinhaber: Merck Patent GmbH, 64293 Darmstadt (DE)
(72) Erfinder: VOSGROENE, Tim, 64372 Ober-Ramstadt (DE); WINKLER, Holger, 64291 Darmstadt (DE); PETRY, Ralf, 64347 Griesheim (DE); BENKER, Andreas, 64686 Lautertal (DE); JUESTEL, Thomas, 58455 Witten (DE); UHLICH, Dominik, 48565 Steinfurt (DE)
(86) Internationale Anmeldenummer: PCT/EP2012/000629
(87) Internationale Veröffentlichungsnummer: WO 2012/119689

(56) Entgegenhaltungen:
- EP-A1- 2 163 593
- WO-A1-2010/119375
- PIAO XIANQING ET AL: "Characterization and luminescence properties of Sr2Si5N8:Eu2+ phosphor for white light-emitting-diode illumination", APPLIED PHYSICS LETTERS, AIP, AMERICAN INSTITUTE OF PHYSICS, MELVILLE, NY, US, Bd. 88, Nr. 16, 18. April 2006 (2006-04-18), Seiten 161908-161908, XP012081176, ISSN: 0003-6951, DOI: 10.1063/1.2196064
- XIE R-J ET AL: "Silicon-based oxynitride and nitride phosphors for white LEDs - A review", SCIENCE AND TECHNOLOGY OF ADVANCED MATERIALS, ELSEVIER, OXFORD, GB, Bd. 8, 1. Januar 2007 (2007-01-01), Seiten 588-600, XP002518479, ISSN: 1468-6996, DOI: 10.1016/J.STAM.2007.08.005

## Beschreibung

Die Erfindung betrifft Carbodiimid-Verbindungen, Verfahren zur Herstellung dieser Verbindungen und deren Verwendung als Konversionsleuchtstoffe bzw. in Leuchtmitteln.

Anorganische fluoreszente Pulver, welche im blauen und/oder UV Bereich des Spektrums anregbar sind, gewinnen immer stärkere Bedeutung als Leuchtstoffe für phosphorkonvertierte LEDs (pc-LEDs).
Mittlerweile sind viele Leuchtstoffmaterialsysteme bekannt, beispielsweise Erdalkali-orthosilikate, Thiogallate, Granate und Nitride, die jeweils mit Cer³⁺ oder Eu²⁺ dotiert sind. Insbesondere die letztgenannten Nitridleuchtstoffe, z.B. M₂Si₅N₈:Eu (auch 2-5-8-Nitride genannt) oder MAISiN₃:Eu (M = Ca und/oder Sr) sind gegenwärtig Thema intensiver Forschung, weil nur diese Emissionswellenlängen größer als 600 nm aufweisen und von daher für die Herstellung von warmweißen pc-LEDs mit Farbtemperaturen < 4000 K essentiell sind.
Ein großer Nachteil der Nitridleuchtstoffe ist jedoch ihre sehr aufwendige Herstellung. Für die Herstellung von Leuchtstoffen der Zusammensetzung M₂Si₅N₈:Eu und MAISiN₃:Eu (mit M = Ca, Sr und/oder Ba) sind folgende Verfahren bekannt:
Schnick et al., Journal of Physics and Chemistry of Solids (2000), 61(12), 2001-2006 beschreibt 2-5-8-Nitride, die nach folgender Synthesegleichung hergestellt werden:

   (2-x) M + xEu + 5 Si(NH)₂ → M₂₋ₓEuₓSi₅N₈ + N₂ + 5 H₂

   Nachteilig an dieser Herstellung ist der Einsatz von stark feuchtigkeitsempfindlichen Edukten, so dass unter Schutzgas gearbeitet werden muss, was die großtechnische Herstellung erschwert.
Hintzen et al., Journal of Alloys and Compounds (2006), 417(1-2), 273-279 beschreibt 2-5-8-Nitride, die nach folgender Synthesegleichung hergestellt werden:

   (2-x) M₃N₂ + 3x EuN + 5 Si₃N₄ →3 M₂₋ₓEuₓSi₅N₈ + 0,5x N₂

   Nachteilig an dieser Herstellung ist der Einsatz von stark feuchtigkeitsempfindlichen Edukten, so dass unter Schutzgas gearbeitet werden muss, was die großtechnische Herstellung erschwert.
Piao et al., Applied Physics Letters 2006, 88, 161908 beschreibt 2-5-8-Nitride, die nach folgender Synthesegleichung u.a. aus Graphit und SrCO₃ (welches thermisch zu SrO zerfällt) hergestellt werden:

   Eu₂ O₃ + SrO + C + N₂ + Si₃N₄ → (Sr₁₋ₓ Euₓ)₂ Si₅N₈ + CO

   Nachteilig an dieser Methode ist, dass man keine phasenreinen Leuchtstoffe erhält, da diese mit Kohlenstoff verunreinigt sind.
Xie et al., Chemistry of materials, 2006, 18, 5578 beschreibt 2-5-8-Nitride, die nach folgender Synthesegleichung hergestellt werden:

   2 Si₃N₄ + 2(2-x) MCO₃ + x/2 Eu₂O₃ → M₂₋ₓEuₓSi₅N₈ + M₂SiO₄ + CO₂

   Nachteilig an dieser Methode ist, dass man Leuchtstoffe mit Verunreinigungen durch o-Silikate erhält.
WO 2010/029184 beschreibt ein Verfahren zur Herstellung von 2-5-8-Nitriden bei der flüssiges Ammoniak eingesetzt wird, was die großtechnische Herstellung solcher Leuchtstoffe einschränkt.
Uheda et al., Electrochem. Sol. Stat. Lett. 9 (4) H22-25 (2006) beschreibt Leuchtstoffe der Zusammensetzung MAISiN₃:Eu, die folgendermaßen hergestellt werden:

   1-x Ca₃N₂ + 3x EuN + Si₃N₄ + 3 AlN → 3 Ca₁₋ₓEuₓAlSiN₃ + 0,5x N₂

   Nachteilig daran ist, dass die verwendeten Edukte Ca₃N₂ und EuN feuchtigkeitsempfindlich sind, so dass unter Schutzgas gearbeitet werden muss, was die großtechnische Herstellung erschwert.
Kijima et al., J. Alloy Comp. 475 (2009) 434-439 beschreibt Leuchtstoffe der Zusammensetzung MAISiN₃:Eu, die folgendermaßen hergestellt werden:

   1-x-y Ca₃N₂ + x Sr₃N₂ + y EuN + Si₃N₄ + 3 AlN → 3 Ca_{1-x-y}SrₓEu_{y}AlSiN₃ + 0,5y N₂

   Es werden feuchtigkeitsempfindliche Edukte wie EuN oder Ca₃N₂ eingesetzt und zusätzlich wird die Synthese bei einem Druck von 19 MPa (heißisostatische Pressung) durchgeführt.

Aufgabe der vorliegenden Erfindung ist es, Nitrid-Leuchtstoffe zu entwickeln, die vergleichbare Leuchtstoffeigenschaften wie bekannte 2-5-8-Nitride aufweisen und Emissionswellenlängen von größer als 600 nm aufweisenEine weitere Aufgabe der vorliegenden Erfindung besteht darin, ein Verfahren zur Herstellung solcher Nitrid-Leuchtstoffe zur Verfügung zu stellen.
Darüber hinaus besteht eine weitere Aufgabe der Erfindung darin, verschiedene Verwendungsmöglichkeiten für diese Leuchtstoffe aufzuzeigen.

Überraschenderweise wurde nun gefunden, dass Nitrid-Leuchtstoffe enthaltend eine Carbodiimidgruppe [CN₂]²⁻ die oben genannte Aufgabe erfüllen.
Ein weiterer Vorteil ist darin zu sehen, dass durch die Verwendung von stabilen Edukten die Anforderungen an das Herstellverfahren wesentlich geringer sind im Vergleich zu den oben genannten Herstellverfahren von 2-5-8-Nitriden.
Der Einbau der [CN₂]²⁻Gruppe in das Kristallgitter ist deshalb möglich geworden, weil der Sauerstoffgehalt der eingesetzten Edukte nicht ausreicht, dass die eingesetzten Carbodiimide quantitativ mit dem freigesetzten Sauerstoff reagieren. Somit lässt sich der Anteil der [CN₂]²⁻-Gruppe im Kristallgitter über den Sauerstoffgehalt der Edukte steuern.

Gegenstand der vorliegenden Erfindung ist daher eine Verbindung der Formel I

(Sr_{1-z-n} Ca_{z}Euₙ)ₘMₚ(SiN₂)ₘ₋ₓ(CN₂)ₓSi_{3w}N_{4w+p} (I)

wobei
M steht für Al, Ga, Y, Gd oder Lu und
m steht für einen Wert aus dem Bereich 0 < m ≤ 3 und
n steht für einen Wert aus dem Bereich 0.005m ≤ n ≤ 0.2m und
p steht für einen Wert aus dem Bereich 0 ≤ p ≤ 3 und
w steht für einen Wert aus dem Bereich 0 ≤ w ≤ 2 und
x steht für einen Wert aus dem Bereich 0 < x ≤ m und
z steht für einen Wert aus dem Bereich 0 ≤ z ≤ 0.4

Dabei liegen Al, Ga, Y, Gd oder Lu in der trivalenten und Eu in der divalenten Oxydationsstufe vor.
Im Folgenden werden die erfindungsgemäßen Verbindungen der Formel I auch vereinfachend als Nitrid-Leuchtstoffe bezeichnet.

Vorzugsweise steht m für einen Wert aus dem Bereich 1 ≤ m ≤ 2. Vorzugsweise steht w für einen Wert aus dem Bereich 0 ≤ w ≤ 1.5 und insbesondere bevorzugt aus dem Bereich 0 ≤ w ≤ 1.
Vorzugsweise steht p für einen Wert aus dem Bereich 0 ≤ p ≤ 2 und insbesondere bevorzugt aus dem Bereich 0 ≤ p ≤ 1.

Vorzugsweise steht z für einen Wert aus dem Bereich 0 ≤ z ≤ 0.25.
In diesem Bereich führt der Zusatz von Ca zu einer langwelligen Verschiebung der Emissionswellenlänge, ohne dass es zu einer nennenswerten Abnahme der Emissionsintensität kommt.
Eine weitere Erhöhung des Ca-Gehalts (z> 0,4) führt zwar zu einer weiteren langwelligen Verschiebung des Emissionsspektrums, jedoch nimmt die Emissionsintensität stark ab und es entstehen Phasengemische. Erfindungsgemäß besonders bevorzugt sind Leuchtstoffe mit Emissionsmaxima im Wellenlängenbereich von 600 bis 640 nm mit folgenden Zusammensetzungen:

Sr_{1,96}Eu_{0,04}(SiN₂)_{0,2}(CN₂)_{1,8}Si₃N₄ λₘₐₓ ≈ 605 nm

Sr_{0,77}Ca_{0,2}Eu_{0,02}Al(SiN₂)_{0,3}(CN₂)_{0,7}N λₘₐₓ ≈ 618 nm

Sr_{1,56}Ca_{0,4}Eu_{0,04}(SiN₂)_{0,2}(CN₂)_{1,8}Si₃N₄ λₘₐₓ ≈ 621 nm

Sr_{1,16}Ca_{0,8}Eu_{0,04}(SiN₂)_{0,2}(CN₂)_{1,8}Si₃N₄ λₘₐₓ ≈ 631 nm

Ein weiterer Erfindungsgegenstand ist ein Verfahren zur Herstellung einer Verbindung der Formel I.
Hierzu werden in einem Schritt a) geeignete Edukte ausgewählt aus binären Nitriden, Carbodiimiden und Oxiden, gegebenenfalls im Gemisch mit anderen entsprechenden reaktiven Formen, gemischt und das Gemisch in einem Schritt b) unter zumindest teilweise reduktiven Bedingungen thermisch behandelt.

Als Carbodiimide (im Verfahrensschritt a) werden vorzugsweise
SrCN₂ oder CaCN₂ eingesetzt. Diese Edukte werden vorzugsweise aus Erdalkalioxalaten hergestellt, welche z.B. in Ammoniakatmosphäre zum entsprechenden Erdalkalicarbodiimid überführt werden. Mindestens eines der Edukte in Schritt a) liegt vorzugsweise erfindungsgemäß als Carbodiimid vor.

Als Europium-haltige Edukte werden vorzugsweise Europiumoxid, Europiumcarbonat oder Europiumoxalat eingesetzt, wobei Europiumoxid besonders bevorzugt ist.

Als binäre Nitride werden vorzugsweise Calciumnitrid, Strontiumnitrid, Aluminiumnitrid, Galliumnitrid, Siliciumnitrid (Si₃N₄), Yttriumnitrid, Lutetiumnitrid, Gadoliniumnitrid eingesetzt, insbesondere bevorzugt Aluminiumnitrid und/oder Siliciumnitrid.

Die oben genannte thermische Behandlung in Schritt b) wird zumindest teilweise unter reduzierenden Bedingungen durchgeführt. Die Umsetzung erfolgt üblicherweise bei einer Temperatur oberhalb 750 °C, vorzugsweise bei einer Temperatur oberhalb 1000°C und insbesondere bevorzugt im Bereich von 1200°C - 1600°C. Die zumindest teilweise reduktiven Bedingungen werden dabei z.B. mit Kohlenmonoxid, Formiergas oder Wasserstoff (reduzierend), oder zumindest mit Vakuum oder durch eine Sauerstoffmangel-Atmosphäre (teilweise reduzierend) eingestellt. Bevorzugt wird eine reduzierende Atmosphäre im Stickstoffstrom, vorzugsweise im N₂/H₂-Strom und insbesondere bevorzugt im N₂/H₂ - Strom (90 - 70 : 10 - 30) eingestellt. Außerdem kann die thermische Behandlung ein- oder mehrstufig durchgeführt werden, wobei einstufig bevorzugt ist.

In einer weiteren Ausführungsform kann der Leuchtstoff gemäß Formel I zusätzlich mindestens mit einem weiteren der folgenden Leuchtstoffmaterialien gemischt werden:
Oxide, Granate, Silicate, Aluminate, Nitride und Oxinitride jeweils einzeln oder Gemische derselben mit einem oder mehreren Aktivatorionen wie Ce, Eu, Mn, Cr. Dies ist besonders dann von Vorteil, wenn bestimmte Farbräume eingestellt werden sollen.

Die erfindungsgemäßen Nitrid-Leuchtstoffe gemäß Formel I liegen partikulär vor und weisen eine Partikelgröpe auf, die üblicherweise zwischen 50 nm und 10 µm, vorzugsweise zwischen 5 µm und 20 µm, beträgt

In einer bevorzugten Ausführungsform besitzen die erfindungsgemäßen Leuchtstoffe in Partikelform eine geschlossene Oberflächenbeschichtung, die aus SiO₂, TiO₂, Al₂O₃, ZnO, ZrO₂ und/oder Y₂O₃ oder Mischoxiden daraus besteht. Diese Oberflächenbeschichtung hat den Vorteil, dass durch eine geeignete Abstufung der Brechungsindices der Beschichtungsmaterialien eine Anpassung des Brechungsindex mit der Umgebung erzielt werden kann. In diesem Fall wird die Streuung des Lichtes an der Oberfläche des Leuchtstoffes verringert und ein größerer Anteil des Lichtes kann in den Leuchtstoff eindringen und dort absorbiert und konvertiert werden. Außerdem ermöglicht es die Brechungsindexangepasste Oberflächenbeschichtung, dass mehr Licht aus dem Leuchtstoff ausgekoppelt wird, weil die interne Totalreflexion verringert wird.

Zudem ist eine geschlossene Schicht dann vorteilhaft, wenn der Leuchtstoff verkapselt werden muss. Dies kann erforderlich sein, um einer Empfindlichkeit des Leuchtstoffes oder Teilen davon gegen diffundierendes Wasser oder andere Materialien in der unmittelbaren Umgebung zu entgegnen. Ein weiterer Grund für die Verkapselung mit einer geschlossenen Hülle ist eine thermische Entkoppelung des eigentlichen Leuchtstoffes von der Wärme, die im Chip entsteht. Diese Wärme führt zu einer Verringerung der Fluoreszenzlichtausbeute des Leuchtstoffes und kann auch die Farbe des Fluoreszenzlichts beeinflussen. Schließlich ist es möglich durch eine solche Beschichtung die Effizienz des Leuchtstoffes zu erhöhen, indem im Leuchtstoff entstehende Gitterschwingungen in ihrer Ausbreitung an die Umgebung gehindert werden.

Außerdem können die erfindungsgemäßen Leuchtstoffe in einer weiteren Ausführungsform auch eine poröse Oberflächenbeschichtung besitzen, die aus SiO₂, TiO₂, Al₂O_{3,} ZnO, ZrO₂ und/oder Y₂O₃ oder Mischoxiden daraus oder aus der Leuchtstoffzu-sammensetzung besteht. Diese porösen Beschichtungen bieten die Möglichkeit, den Brechungsindex einer Einfachschicht weiter zu reduzieren. Die Herstellung solcher poröser Beschichtungen kann nach drei herkömmlichen Methoden geschehen, wie sie in WO 03/027015 beschrieben werden, die voll umfänglich in den Kontext der vorliegenden Anmeldung durch Bezugnahme eingefügt wird: das Ätzen von Glas (z.B. Natron-Kalk-Gläser (siehe US 4019884)), das Aufbringen einer porösen Schicht und die Kombination aus poröser Schicht und einem Ätzvorgang.

In einer weiteren, ebenso bevorzugten Ausführungsform besitzen die Leuchtstoffpartikel eine Oberfläche, die funktionelle Gruppen trägt, welche eine chemische Anbindung an die Umgebung, vorzugsweise bestehend aus Epoxy- oder Silikonharz ermöglicht. Diese funktionellen Gruppen können z.B. über Oxogruppen angebundene Ester oder andere Derivate sein, die mit Bestandteilen der Bindemittel auf Basis von Epoxiden und / oder Silikonen Verknüpfungen eingehen können. Solche Oberflächen haben den Vorteil, dass eine homogene Einmischung der Leuchtstoffe in das Bindemittel ermöglicht wird. Des Weiteren können dadurch die rheologischen Eigenschaften des Systems Leuchtstoff / Bindemittel und auch die Topfzeiten in einem gewissen Masse eingestellt werden. Damit wird die Verarbeitung der Gemische vereinfacht.

Die erfindungsgemäßen Nitrid-Leuchtstoffe sind insbesondere vorteilhaft in Licht emittierenden Dioden (LEDs), und insbesondere in den vorab bereits erwähnten pc-LEDs einsetzbar.

Zum Einsatz in LEDs können die erfindungsgemäßen Leuchtstoffe auch in beliebige äußere Formen, wie sphärische Partikel, Plättchen und strukturierte Materialien und Keramiken überführt werden. Diese Formen werden gewöhnlich unter dem Begriff "Formkörper" zusammengefasst. Vorzugsweise handelt es sich bei dem Formkörper hier um einen "Leuchtstoffkörper".

Besonders bevorzugt werden die erfindungsgemäßen Nitrid-Leuchtstoffe gemäß Formel I daher in Formkörpern, respektive in Leuchtstoffkörpern, enthaltend die erfindungsgemäßen Nitrid-Leuchtstoffe, eingesetzt.

Die Herstellung von plättchenförmigen Leuchtstoffkörpern wie oben beschrieben geschieht nach herkömmlichen Verfahren aus den entsprechenden Metall- und/oder Seltenerd-Salzen. Das Herstellverfahren ist in EP 763573 und DE 102006054331 ausführlich beschrieben, welche voll umfänglich in den Kontext der vorliegenden Anmeldung durch Bezugnahme eingefügt werden. Diese plättchenförmigen Leuchtstoffkörper können hergestellt werden, indem ein natürlicher oder synthetisch hergestellter hoch stabiler Träger bzw. ein Substrat aus beispielsweise Glimmer-, SiO₂-, Al₂O₃-, ZrO₂, Glas- oder TiO₂-Plättchen, welches ein sehr großes Aspektverhältnis aufweist, eine atomar glatte Oberfläche und eine einstellbare Dicke besitzt, durch Fällungsreaktion in wässriger Dispersion oder Suspension mit einer Leuchtstoffschicht beschichtet werden kann. Neben Glimmer, ZrO₂, SiO₂, Al₂O₃, Glas oder TiO₂ oder Gemischen derselben können die Plättchen auch aus dem Leuchtstoffmaterial selbst bestehen, oder aus einem Material aufgebaut sein. Falls das Plättchen selbst lediglich als Träger für die Leuchtstoffbeschichtung dient, muss diese aus einem Material bestehen, welches transparent für die Primärstrahlung der LED ist, oder die Primärstrahlung absorbiert und diese Energie auf die Leuchtstoffschicht überträgt. Die plättchenförmigen Leuchtstoffe werden in einem Harz (z.B. Silikon- oder Epoxidharz), dispergiert und diese Dispersion wird auf dem LED Chip aufgebracht.

Die plättchenförmigen Leuchtstoffe können in Dicken von 50 nm bis zu etwa 20 µm, vorzugsweise zwischen 150 nm und 5 µm, großtechnisch hergestellt werden. Der Durchmesser beträgt dabei von 50 nm bis 20 µm. Er besitzt in der Regel ein Aspektverhältnis (Verhältnis des Durchmessers zur Teilchendicke) von 1: 1 bis 400 : 1, und insbesondere 3 : 1 bis 100 : 1.

Die Plättchenausdehnung (Länge x Breite) ist von der Anordnung abhängig. Plättchen eignen sich auch als Streuzentren innerhalb der Konversionsschicht, insbesondere dann, wenn sie besonders kleine Abmessungen aufweisen.

Die dem LED Chip zugewandte Oberfläche des plättchenförmigen Leuchtstoffes kann mit einer Beschichtung versehen werden, welche entspiegelnd in Bezug auf die von dem LED Chip emittierte Primärstrahlung wirkt. Dies führt zu einer Verringerung der Rückstreuung der Primärstrahlung, wodurch diese besser in den erfindungsgemäßen Leuchtstoffkörper eingekoppelt werden kann.

Hierfür eignen sich beispielsweise brechzahlangepasste Beschichtungen, die eine folgende Dicke d aufweisen müssen: d = [Wellenlänge der Primärstrahlung des LED Chips /(4* Brechzahl der Leuchtstoffkeramik)], s. beispielsweise Gerthsen, Physik, Springer Verlag, 18. Auflage, 1995. Diese Beschichtung kann auch aus photonischen Kristallen bestehen. Wobei hierunter auch eine Strukturierung der Oberfläche des plättchenförmigen Leuchtstoffes fällt, um bestimmte Funktionalitäten zu erreichen.

Die Herstellung der erfindungsgemäßen Leuchtstoffe in Form von keramischen Körpern erfolgt analog nach einem z.B. in der DE 10349038 beschriebenen Festkörperdiffusions-Verfahren (YAG-Keramik), die voll umfänglich in den Kontext der vorliegenden Anmeldung durch Bezugnahme eingefügt wird. Dabei wird der Leuchtstoff durch Mischen der entsprechenden Edukte und Dotierstoffe hergestellt, anschließend isostatisch verpresst und in Form eines homogenen dünnen und nicht porösen Plättchens direkt auf die Oberfläche eines Chips aufgebracht. Somit findet keine ortsabhängige Variation der Anregung und Emission des Leuchtstoffes statt, wodurch die damit ausgerüstete LED einen homogenen und farbkonstanten Lichtkegel emittiert und über eine hohe Lichtleistung verfügt. Die keramischen Leuchtstoffkörper können z.B. als Plättchen in Dicken von einigen 100 nm bis zu etwa 500 µm großtechnisch hergestellt werden. Die Plättchenausdehnung (Länge x Breite) ist von der Anordnung abhängig. Bei direkter Aufbringung auf den Chip ist die Größe des Plättchens gemäß der Chipausdehnung (von ca. 100 µm * 100 µm bis zu mehreren mm²) mit einem gewissen Übermaß von ca. 10% - zu 30% der Chipoberfläche bei geeigneter Chipanordnung (z.B. Flip-Chip-Anordnung) oder entsprechend zu wählen. Wird das Leuchtstoffplättchen über einer fertigen LED angebracht, so ist der austretende Lichtkegel vollständig vom Plättchen zu erfassen.

Die Seitenflächen des keramischen Leuchtstoffkörpers können mit einem Leicht- oder Edelmetall, vorzugsweise Aluminium oder Silber verspiegelt werden. Die Verspiegelung bewirkt, dass kein Licht lateral aus dem Leuchtstoffkörper austritt. Lateral austretendes Licht kann den aus der LED auszukoppelnden Lichtstrom verringern. Die Verspiegelung des keramischen Leuchtstoffkörpers erfolgt in einem Prozessschritt nach der isostatischen Verpressung zu Stangen oder Plättchen, wobei vor der Verspiegelung eventuell ein Schneiden der Stangen oder Plättchen in die erforderliche Größe erfolgen kann. Die Seitenflächen werden hierzu z.B. mit einer Lösung aus Silbernitrat und Glucose benetzt und anschließend bei erhöhter Temperatur einer Ammoniak-Atmosphäre ausgesetzt. Hierbei bildet sich z.B. ein silberner Belag auf den Seitenflächen aus.

Alternativ bieten sich auch stromlose Metallisierungsverfahren an, siehe beispielsweise Hollemann-Wiberg, Lehrbuch der Anorganischen Chemie, Walter de Gruyter Verlag oder Ullmanns Enzyklopädie der chemischen Technologie.

Der keramische Leuchtstoffkörper kann, falls erforderlich, mit einer Wasserglaslösung auf dem Untergrund eines LED Chip fixiert werden.

In einer bevorzugten Ausführungsform besitzt der keramische Leuchtstoffkörper auf der, einem LED Chip entgegengesetzten Seite eine strukturierte (z.B. pyramidale) Oberfläche. Somit kann möglichst viel Licht aus dem Leuchtstoffkörper ausgekoppelt werden. Die strukturierte Oberfläche auf dem Leuchtstoffkörper wird dadurch hergestellt, in dem beim isostatischen Verpressen das Presswerkzeug eine strukturierte Pressplatte aufweist und dadurch eine Struktur in die Oberfläche prägt. Strukturierte Oberflächen sind dann gewünscht, wenn möglichst dünne Leuchtstoffkörper bzw. Plättchen hergestellt werden sollen. Die Pressbedingungen sind dem Fachmann bekannt (siehe J. Kriegsmann, Technische keramische Werkstoffe, Kap. 4, Deutscher Wirtschaftsdienst, 1998). Wichtig ist, dass als Presstemperaturen 2/3 bis zu 5/6 der Schmelztemperatur des zu verpressenden Stoffes verwendet werden.

Die Anregbarkeit der erfindungsgemäßen Leuchtstoffe erstreckt sich über einen weiten Bereich, der von etwa 410 nm bis 530 nm, bevorzugt 430 nm bis zu etwa 500 nm reicht. Damit sind diese Leuchtstoffe nicht nur zur Anregung durch UV oder blau emittierende Lichtquellen wie LEDs oder konventionelle Entladungslampen (z.B. auf Hg-Basis) geeignet, sondern auch für Lichtquellen wie solche, welche die blaue In³⁺ -Linie bei 451 nm ausnutzen.

Ein weiterer Gegenstand der vorliegenden Erfindung ist eine Lichtquelle, welche einen Halbleiter und mindestens eine Verbindung nach Formel I enthält. Vorzugsweise ist diese Lichtquelle weiß emittierend.

In einer bevorzugten Ausführungsform der erfindungsgemäßen Lichtquelle handelt es sich bei dem Halbleiter um ein lumineszentes IndiumAluminiumGalliumNitrid, insbesondere der Formel
InᵢGaⱼAlₖN, wobei 0 ≤ i, 0 ≤ j, 0 ≤ k, und i+j+k=1 ist.

In einer weiteren bevorzugten Ausführungsform der erfindungsgemäßen Lichtquelle handelt es sich bei der Lichtquelle um eine lumineszente, auf ZnO, TCO (Transparent conducting oxide), ZnSe oder SiC basierende Anordnung oder auch um eine auf einer organischen lichtemittierenden Schicht basierende Anordnung (OLED).

In einer weiteren bevorzugten Ausführungsform der erfindungsgemäßen Lichtquelle handelt es sich bei der Lichtquelle um eine Quelle, die Elektrolumineszenz und/oder Photolumineszenz zeigt. Weiterhin kann es sich bei der Lichtquelle auch um eine Plasma- oder Entladungsquelle handeln.

Dem Fachmann sind mögliche Formen von derartigen Lichtquellen bekannt. Es kann sich hierbei um lichtemittierende LED-Chips unterschiedlichen Aufbaus handeln.

Die erfindungsgemäßen Nitrid-Leuchtstoffe können entweder in einem Harz dispergiert (z.B. Epoxy- oder Siliconharz), oder bei geeigneten Größenverhältnissen direkt auf der Lichtquelle angeordnet werden, oder aber von dieser, je nach Anwendung, entfernt angeordnet sein (letztere Anordnung schließt auch die "Remote phosphor Technologie" mit ein). Die Vorteile der "Remote phosphor Technologie" sind dem Fachmann bekannt und z.B. der folgenden Publikation zu entnehmen: Japanese Journ. of Appl. Phys. Vol. 44, No. 21 (2005). L649-L651.

Ein weiterer Erfindungsgegenstand ist eine Beleuchtungseinheit, insbesondere zur Hintergrundbeleuchtung von Anzeigevorrichtungen, die mindestens eine vorab beschriebene Lichtquelle enthält.
Solche Beleuchtungseinheiten werden hauptsächlich in Anzeigevorrichtungen, insbesondere auch in Flüssigkristallanzeigevorrichtungen (LC-Displays), mit einer Hintergrundbeleuchtung eingesetzt. Daher ist auch eine derartige Anzeigevorrichtung Gegenstand der vorliegenden Erfindung.

In einer weiteren Ausführungsform der vorliegenden Erfindung ist es bevorzugt, wenn die optische Ankopplung der oben beschriebenen Beleuchtungseinheit zwischen dem Nitrid-Leuchtstoff und dem Halbleiter durch eine lichtleitende Anordnung realisiert wird. Dadurch ist es möglich, dass an einem zentralen Ort der Halbleiter installiert wird und dieser mittels lichtleitender Vorrichtungen, wie beispielsweise lichtleitenden Fasern, an den Leuchtstoff optisch angekoppelt ist. Auf diese Weise lassen sich den Beleuchtungswünschen angepasste Leuchten lediglich bestehend aus einem oder unterschiedlichen Leuchtstoffen, die zu einem Leuchtschirm angeordnet sein können, und einem Lichtleiter, der an die Lichtquelle angekoppelt ist, realisieren. Auf diese Weise ist es möglich, eine starke Lichtquelle an einen für die elektrische Installation günstigen Ort zu platzieren und ohne weitere elektrische Verkabelung, sondern nur durch Verlegen von Lichtleitern an beliebigen Orten Leuchten aus Leuchtstoffen, welche an die Lichtleiter gekoppelt sind, zu installieren.

Ein weiterer Gegenstand der vorliegenden Erfindung ist die Verwendung der erfindungsgemäßen Verbindungen nach Formel I als Leuchtstoff, vorzugsweise Konversionsleuchtstoff, insbesondere bevorzugt zur teilweisen oder vollständigen Konversion der blauen oder im nahen UV-Bereich liegenden Emission einer Lumineszenzdiode.

Weiterhin bevorzugt ist die Verwendung der erfindungsgemäßen Leuchtstoffe zur Konversion der blauen oder im nahen UV-Bereich liegenden Emission in sichtbare weiße Strahlung.

Die Verwendung der erfindungsgemäßen Nitrid-Leuchtstoffe ist auch in Elektrolumineszenz-Materialien, wie beispielsweise Elektrolumineszenz-Folien (auch Leuchtfolien oder Lichtfolien genannt), in denen beispielsweise Zinksulfid oder Zinksulfid dotiert mit Mn²⁺, Cu⁺, oder Ag⁺ als Emitter eingesetzt wird, die im gelb-grünen Bereich emittieren, von Vorteil. Die Anwendungsbereiche der Elektrolumineszenz-Folie sind z.B. Werbung, Displayhintergrundbeleuchtung in Flüssigkristallbildschirmen (LC-Displays) und Dünnschichttransistor-Displays (TFT-Displays), selbstleuchtende KFZ-Kennzeichenschilder, Bodengrafik (in Verbindung mit einem tritt- und rutschfesten Laminat), in Anzeigen- und/oder Bedienelementen beispielsweise in Automobilen, Zügen, Schiffen und Flugzeugen oder auch in Haushalts-, Garten-, Mess- oder Sport- und Freizeitgeräten.

Die folgenden Beispiele sollen die vorliegende Erfindung verdeutlichen. Sie sind jedoch keinesfalls als limitierend zu betrachten. Alle Verbindungen oder Komponenten, die in den Zubereitungen verwendet werden können, sind entweder bekannt und kommerziell erhältlich oder können nach bekannten Methoden synthetisiert werden. Die in den Beispielen angegebenen Temperaturen gelten immer in °C. Es versteht sich weiterhin von selbst, dass sich sowohl in der Beschreibung als auch in den Beispielen die zugegebenen Mengen der Komponenten in den Zusammensetzungen immerzu insgesamt 100 % addieren. Gegebene Prozentangaben sind immer im gegebenen Zusammenhang zu sehen. Sie beziehen sich üblicherweise aber immer auf die Masse der angegebenen Teil- oder Gesamtmenge.

Auch ohne weitere Ausführungen wird davon ausgegangen, dass ein Fachmann die obige Beschreibung in weitestem Umfang nutzen kann. Die bevorzugten Ausführungsformen sind deswegen lediglich als beschreibende, keinesfalls als in irgendeiner Weise limitierende Offenbarung aufzufassen. Die vollständige Offenbarung aller vor- und nachstehend aufgeführten Anmeldungen und Veröffentlichungen sind durch Bezugnahme in diese Anmeldung eingeführt.

### Beispiele

### Beispiel 1: Herstellung von Sr_{1,96}Eu_{0,04}(SiN₂)_{0,2}(CN₂)_{1,8}Si₃N₄

### 1.1. Darstellung von Strontiumcarbodiimid:

10 g Strontiumoxalat werden in einen Bornitridtiegel gefüllt und in einen Rohrofen überführt. In diesem wird das Material 8 Stunden bei 800 °C unter einer Ammoniakatmosphäre (120 I/h) praktisch quantitativ in Strontiumcarbodiimid überführt.

### 1.2. Herstellung von Sr_{1,96}Eu_{0,04}(SiN₂)_{0,2}(CN₂)_{1,8}Si₃N₄

6,25 g SrCN₂ (49 mmol), 0,176 g Eu₂O₃ (0,5 mmol), und 3,78 g Si₃N₄ (27 mmol) werden eingewogen und in einem Handmörser intensiv vermischt. Diese Mischung wird in einen Bornitridtiegel überführt und in einem Rohrofen 8 Stunden bei 1400 °C unter einer Stickstoff/Wasserstoffatmosphäre reduktiv kalziniert. Der so erhaltene Leuchtstoff wird kurz gemörsert und über ein Sieb mit einer Maschenweite von 20 µm klassiert.

Der Leuchtstoff emittiert im roten Wellenlängenbereich bei λₘₐₓ ≈ 605 nm. Die Emissionsmessung wird jeweils an einer optisch unendlich dicken Schicht des Leuchtstoffes bei einer Anregung von 450 nm mit einem Edinburgh Instruments Spektrometer OC290 bei Raumtemperatur durchgeführt.

### Beispiel 2: Herstellung von Sr_{0,77}Ca_{0,21}Eu_{0,02}Al(SiN₂)_{0,3}(CN₂)_{0,7}N

### 2.1. Herstellung von Strontiumcarbodiimid wie unter 1.1

### 2.2. Herstellung von Sr_{0,77}Ca_{0,12}Eu_{0,02}Al(SiN₂)_{0,3}(CN₂)_{0,7}N

9,82 g SrCN₂ (77 mmol), 0,352 g Eu₂O₃ (1 mmol), 1,04 g Ca₃N₂ (7 mmol), 4,1 g AIN (100 mmol) und 1,4 g Si₃N₄ (10 mmol) werden eingewogen und in einem Handmörser intensiv vermischt. Diese Mischung wird in einen Bornitridtiegel überführt und in einem Rohrofen 8 Stunden bei 1400 °C unter einer Stickstoff/Wasserstoffatmosphäre reduktiv kalziniert. Der so erhaltene Leuchtstoff wird kurz gemörsert und über ein Sieb mit einer Maschenweite von 20 µm klassiert.

Der Leuchtstoff emittiert im roten Wellenlängenbereich bei λₘₐₓ ≈ 618 nm. Die Emissionsmessung wird jeweils an einer optisch unendlich dicken Schicht des Leuchtstoffes bei einer Anregung von 450 nm mit einem Edinburgh Instruments Spektrometer OC290 bei Raumtemperatur durchgeführt.

### Beispiel 3: Herstellung des Referenz-Leuchtstoffs Sr_{1,96}Eu_{0,04}Si₅N₈

4,75 g Sr₃N₂ (16,333 mmol), 0,166 g EuN (1 mmol) und 5,666 g Si₃N₄ (39,583 mmol) werden in einer mit Argon gefüllten Glovebox eingewogen und in einem Handmörser intensiv vermischt. Diese Mischung wird in einen Bornitridtiegel überführt und in einem Rohrofen 8 Stunden bei 1600 °C unter einer Stickstoff/Wasserstoff-atmosphäre reduktiv kalziniert. Der so erhaltene Leuchtstoff wird kurz gemörsert und über ein Sieb mit einer Maschenweite von 20 µm klassiert.

### Beispiel 4: Herstellung einer Leuchtdiode

Der Leuchtstoff aus Beispiel 1 wird in einem Taumelmischer mit einem 2-Komponenten Silikon (OE 6550 der Fa. Dow Corning) gemischt, so dass gleiche Mengen der Leuchtstoffmischung in den beiden Komponenten des Silikons dispergiert sind; die Gesamtkonzentration des Leuchtstoffs im Silikon beträgt 8 Gew.-%.

5 ml jeder der beiden Leuchtstoff enthaltenden Silikon Komponenten werden homogen miteinander gemischt und in einen Dispenser überführt. Mit Hilfe des Dispensers werden leere LED packages von der Fa. OSA optoelectronics, Berlin, welche einen 100 µm² großen GaN Chip enthalten, befüllt. Danach werden die LEDs in eine Wärmekammer gestellt, um über 1 h bei 150°C das Silikon zu verfestigen.

### Beschreibung der Figuren

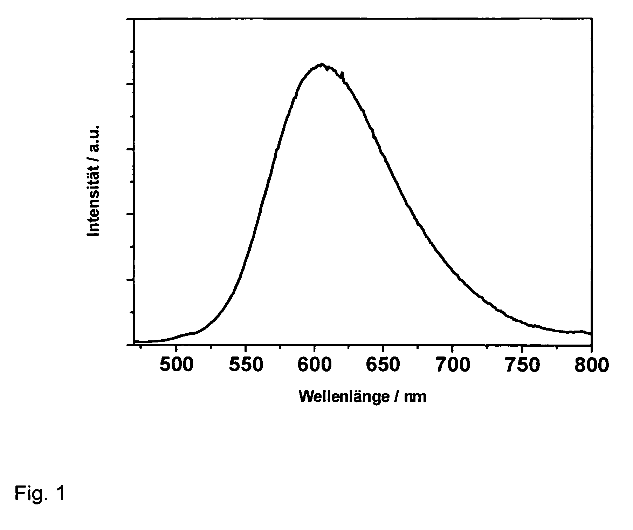

**Fig. 1****:** zeigt das Emissionsspektrum des erfindungsgemäßen Leuchtstoffes Sr_{1,96}Eu_{0.04}(SiN₂)_{0.2}(CN₂)_{1.8}Si₃N₄ (Peak bei 605 nm)
   Die Emissionsmessung wird an einer optisch unendlich dicken Schicht des Leuchtstoffes bei einer Anregung von 450 nm mit einem Edinburgh Instruments Spektrometer OC290 bei Raumtemperatur durchgeführt.

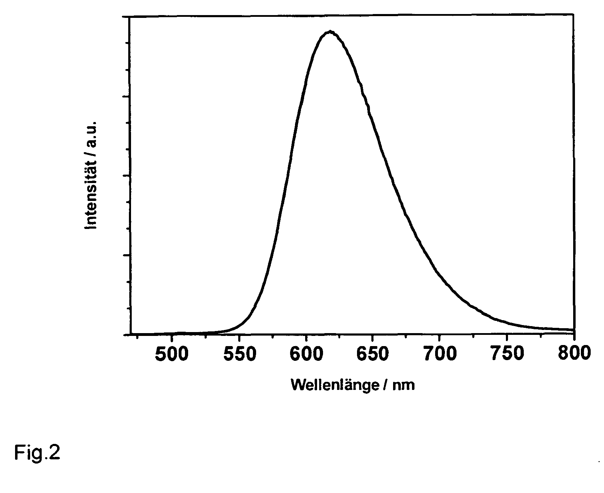

**Fig. 2****:** zeigt das Emissionsspektrum des erfindungsgemäßen Leuchtstoffes Sr_{0.77}Ca_{0.21}Eu_{0.02}Al(SiN₂)_{0.3}(CN₂)_{0.7}N (Peak bei 618 nm)
   Die Emissionsmessung wird an einer optisch unendlich dicken Schicht des Leuchtstoffes bei einer Anregung von 450 nm mit einem Edinburgh Instruments Spektrometer OC290 bei Raumtemperatur durchgeführt.

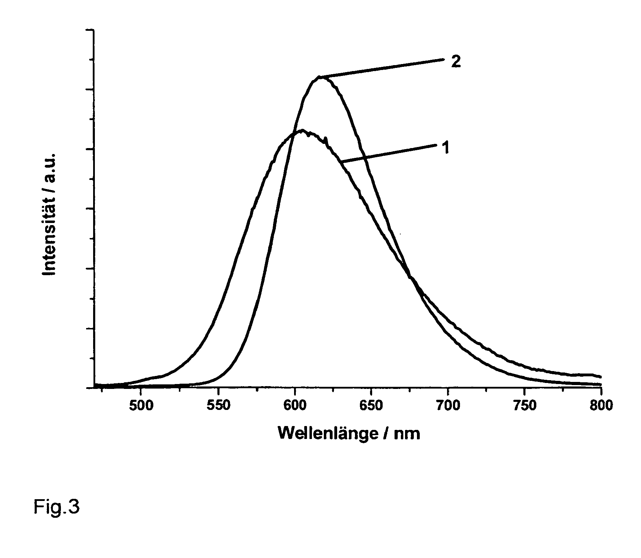

Fig. 3: zeigt das Vergleichsspektrum des erfindungsgemäßen Leuchtstoffes aus Beispiel 1 (Spektrum 1) mit einem 2-5-8-Nitrid (Referenz-Leuchtstoff) der Zusammensetzung Sr_{1,96}Eu_{0,04}Si₅N₈ (Spektrum 2).
   Die Peakintensität des erfindungsgemäßen Leuchtstoffs ist zwar gegenüber dem Referenz-Leuchtstoff geringer, jedoch ist das Integral des Emissionsspektrums beim erfindungsgemäßen Leuchtstoff größer.
   Die Emissionsmessung wird jeweils an einer optisch unendlich dicken Schicht des Leuchtstoffes bei einer Anregung von 450 nm mit einem Edinburgh Instruments Spektrometer OC290 bei Raumtemperatur durchgeführt.

## Patentansprüche

1. Verbindung der Formel I
(Sr_{1-z-n} Ca_{z}Euₙ)ₘMₚ(SiN₂)ₘ₋ₓ(CN₂)ₓSi_{3w}N_{4w+p} (I)
wobei
M für Al, Ga, Y, Gd oder Lu steht und
m für einen Wert aus dem Bereich 0 < m ≤ 3 steht und
n für einen Wert aus dem Bereich 0.005m ≤ n ≤ 0.2m steht und
p für einen Wert aus dem Bereich 0 ≤ p ≤ 3 steht und
w für einen Wert aus dem Bereich 0 ≤ w ≤ 2 steht und
x für einen Wert aus dem Bereich 0 < x ≤ m steht und
z für einen Wert aus dem Bereich 0 ≤ z ≤ 0.4 steht.

2. Verbindung nach Anspruch 1, **dadurch gekennzeichnet, dass** m für einen Wert aus dem Bereich 1 ≤ m ≤ 2 steht.

3. Verbindung nach Anspruch 1 oder 2, daduch gekennzeichnet, dass z für einen Wert aus dem Bereich 0 ≤ z ≤ 0.25 steht.

4. Verbindung nach einem oder mehreren der Ansprüche 1 bis 3, **dadurch gekennzeichnet, dass** M für Al, Y oder Lu steht, vorzugsweise Al.

5. Verbindung nach einem oder mehreren der Ansprüche 1 bis 4, **dadurch gekennzeichnet, dass** w für einen Wert aus dem Bereich 0 ≤ w ≤ 1.5, vorzugsweise 0 ≤ w ≤ 1 steht.

6. Verbindung nach einem oder mehreren der Ansprüche 1 bis 5, **dadurch gekennzeichnet, dass** p für einen Wert aus dem Bereich 0 ≤ p ≤ 2 steht, vorzugsweise aus dem Bereich 0 ≤ p ≤ 1.

7. Verfahren zur Herstellung einer Verbindung der Formel I gemäß einem oder mehreren der Ansprüche 1 bis 6, **dadurch gekennzeichnet, dass** in einem Schritt a) geeignete Edukte ausgewählt aus binären Nitriden, Carbodiimiden und Oxiden, gegebenenfalls im Gemisch mit anderen reaktiven Formen, gemischt werden und das Gemisch in einem Schritt b) unter zumindest teilweise reduktiven Bedingungen thermisch behandelt wird.

8. Verfahren nach Anspruch 7, **dadurch gekennzeichnet, dass** die thermische Behandlung im Schritt b) unter reduktiven Bedingungen erfolgt.

9. Verfahren nach Anspruch 7 oder 8, **dadurch gekennzeichnet, dass** im Schritt b) die Umsetzung bei einer Temperatur >750°C, vorzugsweise bei einer Temperatur > 1000°C und insbesondere bevorzugt im Bereich von 1200 bis 1600°C erfolgt.

10. Lichtquelle, **dadurch gekennzeichnet, dass** diese einen Halbleiter und mindestens eine Verbindung nach Formel I gemäß Anspruch 1 enthält.

11. Lichtquelle nach Anspruch 10, **dadurch gekennzeichnet, dass** es sich bei dem Halbleiter um ein lumineszentes IndiumAluminiumGalliumNitrid, insbesondere der Formel InᵢGaⱼAlₖN, wobei 0 ≤ i, 0 ≤ j, 0 ≤ k, und i+j+k=1 handelt.

12. Beleuchtungseinheit, insbesondere zur Hintergrundbeleuchtung von Anzeigevorrichtungen, **dadurch gekennzeichnet, dass** sie mindestens eine Lichtquelle nach den Ansprüchen 10 oder 11 enthält.

13. Anzeigevorrichtung, insbesondere Flüssigkristallanzeigevorrichtung (LC Display), mit einer Hintergrundbeleuchtung, **dadurch gekennzeichnet, dass** sie mindestens eine Beleuchtungseinheit nach Anspruch 12 enthält.

14. Verwendung von mindestens einer Verbindung nach einem oder mehreren der Ansprüche 1 bis 6 als Konversionsleuchtstoff zur teilweisen oder vollständigen Konversion der blauen oder im nahen UV-liegenden Emission einer Lumineszenzdiode.

## Claims

1. Compound of the formula I
(Sr_{1-z-n} Ca_{z}Euₙ)ₘMₚ(SiN₂)ₘ₋ₓ(CN₂)ₓSi_{3w}N4_{w+p} (I)
where
M stands for Al, Ga, Y, Gd or Lu and
m stands for a value from the range 0 < m ≤ 3 and
n stands for a value from the range 0.005m ≤ n ≤ 0.2m and
p stands for a value from the range 0 ≤ p ≤ 3 and
w stands for a value from the range 0 ≤ w ≤ 2 and
x stands for a value from the range 0 < x ≤ m and
z stands for a value from the range 0 ≤ z ≤ 0.4.

2. Compound according to Claim 1, **characterised in that** m stands for a value from the range 1 ≤ m ≤ 2.

3. Compound according to Claim 1 or 2, **characterised in that** z stands for a value from the range 0 ≤ z ≤ 0.25.

4. Compound according to one or more of Claims 1 to 3, **characterised in that** M stands for Al, Y or Lu, preferably Al.

5. Compound according to one or more of Claims 1 to 4, **characterised in that** w stands for a value from the range 0 ≤ w ≤ 1.5, preferably 0 ≤ w ≤ 1.

6. Compound according to one or more of Claims 1 to 5, **characterised in that** p stands for a value from the range 0 ≤ p ≤ 2, preferably from the range 0 ≤ p ≤ 1.

7. Process for the preparation of a compound of the formula I according to one or more of Claims 1 to 6, **characterised in that**, in a step a), suitable starting materials selected from binary nitrides, carbodiimides and oxides, optionally in a mixture with other reactive forms, are mixed and, in a step b), the mixture is thermally treated under at least partially reductive conditions.

8. Process according to Claim 7, **characterised in that** the thermal treatment in step b) is carried out under reductive conditions.

9. Process according to Claim 7 or 8, **characterised in that** the reaction in step b) is carried out at a temperature > 750°C, preferably at a temperature > 1000°C and particularly preferably in the range from 1200 to 1600°C.

10. Light source, **characterised in that** it comprises a semiconductor and at least one compound of the formula I according to Claim 1.

11. Light source according to Claim 10, **characterised in that** the semiconductor is a luminescent indium aluminium gallium nitride, in particular of the formula InᵢGaⱼAlₖN, where 0 ≤ i, 0 ≤ j, 0 ≤ k, and l + j + k = 1.

12. Lighting unit, in particular for the backlighting of display devices, **characterised in that** it comprises at least one light source according to Claim 10 or 11.

13. Display device, in particular liquid-crystal display device (LC display), having backlighting, **characterised in that** it comprises at least one lighting unit according to Claim 12.

14. Use of at least one compound according to one or more of Claims 1 to 6 as conversion phosphor for the partial or complete conversion of the blue or near-UV emission from a luminescent diode.

## Revendications

1. Composé de la formule I :
(Sr_{1-z-n} Ca_{z}Euₙ)ₘMₚ(SiN₂)ₘ₋ₓ(CN₂)ₓSi_{3w}N_{4w+p} (I)
dans laquelle :
M représente Al, Ga, Y, Gd ou Lu et
m représente une valeur dans la plage 0 < m ≤ 3 et
n représente une valeur dans la plage 0,005m ≤ n ≤ 0,2m et
p représente une valeur dans la plage 0 ≤ p ≤ 3 et
w représente une valeur dans la plage 0 ≤ w ≤ 2 et
x représente une valeur dans la plage 0 < x ≤ m et
z représente une valeur dans la plage 0 ≤ z ≤ 0,4.

2. Composé selon la revendication 1, **caractérisé en ce que** m représente une valeur dans la plage 1 ≤ m ≤ 2.

3. Composé selon la revendication 1 ou 2, **caractérisé en ce que** z représente une valeur dans la plage 0 ≤ z ≤ 0,25.

4. Composé selon une ou plusieurs des revendications 1 à 3, **caractérisé en ce que** M représente Al, Y ou Lu, de façon préférable Al.

5. Composé selon une ou plusieurs des revendications 1 à 4, **caractérisé en ce que** w représente une valeur dans la plage 0 ≤ w ≤ 1,5, de façon préférable 0 ≤ w ≤ 1.

6. Composé selon une ou plusieurs des revendications 1 à 5, **caractérisé en ce que** p représente une valeur dans la plage 0 ≤ p ≤ 2, de façon préférable dans la plage 0 ≤ p ≤ 1.

7. Procédé pour la préparation d'un composé de la formule I selon une ou plusieurs des revendications 1 à 6, **caractérisé en ce que**, au niveau d'une étape a), des matériaux de départ appropriés choisis parmi des nitrures binaires, des carbodiimides et des oxydes, en option en mélange avec d'autres formes réactives, sont mélangés et au niveau d'une étape b), le mélange est traité thermiquement sous des conditions au moins partiellement réductrices.

8. Procédé selon la revendication 7, **caractérisé en ce que** le traitement thermique de l'étape b) est mis en oeuvre sous des conditions réductrices.

9. Procédé selon la revendication 7 ou 8, **caractérisé en ce que** la réaction de l'étape b) est mise en oeuvre à une température > 750°C, de façon préférable à une température > 1000°C et de façon particulièrement préférable, dans la plage de 1200 à 1600°C.

10. Source de lumière, **caractérisée en ce qu'**elle comprend un semiconducteur et au moins un composé de la formule I selon la revendication 1.

11. Source de lumière selon la revendication 10, **caractérisée en ce que** le semiconducteur est un nitrure d'indium aluminium gallium luminescent, en particulier de la formule InᵢGaⱼAlₖN, où 0 ≤ i, 0 ≤ j, 0 ≤ k, et I + j + k = 1.

12. Unité d'éclairage, en particulier pour l'éclairage arrière de dispositifs d'affichage, **caractérisée en ce qu'**elle comprend au moins une source de lumière selon la revendication 10 ou 11.

13. Dispositif d'affichage, en particulier dispositif d'affichage à cristaux liquides (affichage LC), comportant un éclairage arrière, **caractérisé en ce qu'**il comprend au moins une unité d'éclairage selon la revendication 12.

14. Utilisation d'au moins un composé selon une ou plusieurs des revendications 1 à 6 en tant que phosphore de conversion pour la conversion partielle ou complète de l'émission de bleu ou des UV proches en provenance d'une diode luminescente.
